# EUROPEAN PATENT APPLICATION

(11) **EP 4 379 632 A1**
(43) Date of publication of application: **05.06.2024**
(21) Application number: 22306764.6
(22) Date of filing: 30.11.2022
(51) Int. Cl.: G06Q 20/34, G06Q 20/40

(54) **METHOD FOR MANAGING A CARD**

(71) Applicant: THALES DIS FRANCE SAS, 92190 Meudon (FR)
(72) Inventor: SALLES, Jean-Luc, 13720 La Bouilladisse (FR); SOUCHON, Pierre, 13600 La Ciotat (FR); MARTINEZ, Frédéric, 13011 Marseille (FR)
(74) Representative: Grevin, Emmanuel

(57) **Abstract**

The invention is a method for providing a cardholder (50) with control over a payment instrument (10) wherein a payment instrument issuer stores a first set of security parameters in the payment instrument. During a customization phase, the cardholder configures and stores a second set (12) of security parameters in the payment instrument. During a transaction phase subsequent to the customization phase, a financial transaction starts with a terminal (20). The payment instrument checks which condition of the first set is satisfied by the transaction parameters received from the terminal and selects the security rule associated with the satisfied condition as a first selected security rule. The payment instrument checks which condition of the second set (12) is satisfied by the transaction parameters and selects the security rule associated with the satisfied condition as a second selected security rule and applies both said first and second selected security rules to the transaction.

## Description

### (Field of the invention)

The present invention relates to methods for managing a card. It relates particularly to methods for providing a cardholder with control over the behavior of a payment card.

### (Background of the invention)

Smart cards are portable small devices comprising a memory, a microprocessor and an operating system for computing treatments. They may comprise services applications like Payment, Access or Telecom applications. Such smart cards may comprise a plurality of memories of different types, like non-volatile memory and volatile memory. They are considered as tamperresistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine which provides them with electric power either in contact mode or contactless mode.

Contact smart cards are designed to communicate according to at least one contact protocol like ISO/IEC7816 T=0 or T=1 communication protocols. Contactless smart cards are designed to communicate according to at least one contactless protocol like a protocol defined by ISO/IEC 14443 standard.

### (Summary of the Invention)

Until today, when a physical payment smart card is delivered to a cardholder (i.e. the card user), the card has been previously personalized with a unique hardcoded data set (also named security profile) which specifies the behavior of the card during a payment transaction. The issued payment card may be either a debit card or a credit card personalized with specific security rules. For instance, a preset security rule may specify that PIN code must be checked if the transaction amount is above a predefined threshold and no PIN code presentation is required when the transaction amount is below the threshold for a contactless transaction. If the cardholder wants to change the security rules applied by a physical payment card, the only possibility is to contact the card issuer (i.e. the issuing bank) and to get a new physical payment card that replaces the previous one.

Such a process is costly and time-consuming since it implies building a new smart card.

There is need to allow a user to customize the security rules applied by their payment card when the card has already been deployed on the field.

The invention aims at solving the above mentioned technical problem.

An object of the present invention is a method for providing a cardholder with control over a payment instrument. The method comprise a step in which an issuer of the payment instrument configures a first set of security parameters and stores said first set in a memory of the payment instrument. Each of the security parameters of the first set comprises both a security condition and an associated security rule to be applied by the payment instrument when the security condition is fulfilled. The method comprises a step in which during a customization phase, the cardholder configures a second set of security parameters and stores said second set in the memory of the payment instrument, each of the security parameters of the second set comprising both a security condition and an associated security rule to be applied by the payment instrument when the security condition is fulfilled. During a transaction phase subsequent to the customization phase, the method comprises the following steps:
starting a financial transaction involving the payment instrument and a terminal and receiving, by the payment instrument, transaction parameters from the terminal;
checking, by the payment instrument, which condition of the first set is satisfied by the transaction parameters and selecting the security rule associated with the satisfied condition as a first selected security rule;
checking, by the payment instrument, which condition of the second set is satisfied by the transaction parameters and selecting the security rule associated with the satisfied condition as a second selected security rule; and
applying, by the payment instrument, both said first and second selected security rules to the financial transaction.

Advantageously, applying both said first and second selected security rules may lead to impose a specific cardholder authentication method.

Advantageously, the payment instrument may embed a biometric sensor and the second selected security rule may require the payment instrument authenticate the cardholder using the biometric sensor.

Advantageously, applying both said first and second selected security rules may lead to accept or decline the financial transaction.

Advantageously, the second selected security rule may lead to deny the financial transaction if the financial transaction is a cash withdrawal and the terminal is an automated teller machine.

Advantageously, the second selected security rule may lead to deny the financial transaction if the terminal is located in a blacklisted place.

Advantageously, the second selected security rule may lead to deny the financial transaction if the terminal is communicably coupled to the payment instrument through a contactless channel.

Advantageously, the transaction parameters may include one or more of the group comprising: a transaction amount, an identifier of a merchant, a type of merchant, a date, a transaction type, a terminal type, a communication mode and a location.

Advantageously, during a configuration phase subsequent to the transaction phase, the cardholder may update said second set of security parameters in the memory of the payment instrument via a user interface of a portable hardware device coupled to the payment instrument through a contactless protocol.

Advantageously, at least one security parameter of said second set may impose a first security level, wherein the payment instrument authorizes the cardholder to replace said at least one security parameter with a new security parameter that imposes a second security level lower than the first security level only if the payment instrument has successfully authenticated the cardholder.

Another object of the present invention is a payment instrument comprising a hardware processor, a memory and a first set of security parameters configured by an issuer of the payment instrument, each of the security parameters of the first set comprising both a security condition and an associated security rule to be applied by the payment instrument when the security condition is fulfilled. The payment instrument comprises a security configurator configured to store in the memory a second set of security parameters configured by a cardholder during a customization phase, each of the security parameters of the second set comprising both a security condition and an associated security rule to be applied by the payment instrument when the security condition is fulfilled. During a transaction phase subsequent to the customization phase the payment instrument is configured to receive transaction parameters of a started financial transaction involving the payment instrument and a terminal. The payment instrument comprises a security engine configured to check which condition of the first set is satisfied by the transaction parameters and to select the security rule associated with the satisfied condition as a first selected security rule. The security engine is configured to check which condition of the second set is satisfied by the transaction parameters and to select the security rule associated with the satisfied condition as a second selected security rule. The security engine is configured to apply both said first and second selected security rules to the financial transaction.

Advantageously, the payment instrument may embed a biometric sensor and the second selected security rule may require the payment instrument authenticate the cardholder using the biometric sensor.

Advantageously, the security configurator may be configured to receive data from a portable hardware device coupled to the payment instrument through a contactless protocol and to update said second set of security parameters in the memory of the payment instrument by using the received data.

Advantageously, at least one security parameter of said second set may impose a first security level, and the payment instrument may be configured to authorize the cardholder to replace said at least one security parameter with a new security parameter that imposes a second security level lower than the first security level only if the payment instrument has successfully authenticated the cardholder.

Advantageously, the payment instrument may be a smart card, a payment keychain, a payment bracelet, a payment ring or a digitalized card hosted by a mobile device.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows a first exemplary flow diagram for providing a cardholder with control over the behavior of a payment instrument according to an example of the invention; and
Fig. 2 shows a diagram of architecture of a payment instrument according to an example of the invention.

### (Detailed description of the preferred embodiments)

The invention may apply to any type of payment instrument. The invention is well suited for payment smart cards and may also apply to physical payment instruments having a different form factor like a ring or a bracelet.

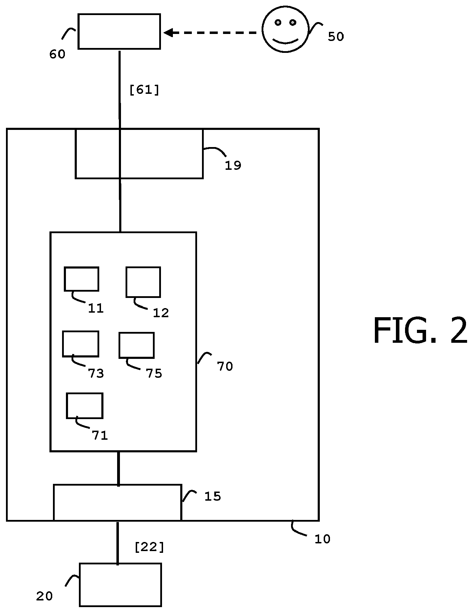

Figure 2 depicts a diagram of architecture of a payment card according to an example of the invention.

In this example, the payment instrument 10 is a payment smart card allocated to a user 50.

The card 10 comprises a secure chip 70 (also called secure element), a first physical communication interface 19 which is designed to exchange data with outside in wireless mode, and a second physical communication interface 15 which is designed to exchange data with a card reader. For instance, the communication interface 19 may be compliant with Bluetooth Low Energy^{©} (BLE), Wi-Fi or NFC (Near Field Communication) technology. The communication interface 19 may be internally linked to the secure element 70 via a bus.

The physical communication interface 15 may be adapted to communicate either in contact mode or in contactless mode. For instance, the communication interface 15 may be compliant with ISO/IEC7816 standard or ISO/IEC14443 standard.

The secure chip 70 comprises a hardware processor and a non-volatile memory (not shown). The non-volatile memory stores an operating system 71 that includes software instructions that are executed by the processor to perform the features of the secure chip. The secure element 70 may be based on a conventional smart card chip with additional features. The secure element 70 may be able to contribute to a banking transaction with an external machine. For instance, the transaction may be a payment transaction or cash withdrawal.

As shown at Figure 2, the card 10 may be communicably coupled to a portable device 60 that may be a smartphone or a laptop for instance.

In the example of Figure 2, the card 10 is communicably coupled to a Point-Of-Sale (POS) terminal 20 through the physical communication interface 15.

The secure element 70 comprises a first set 11 of security parameters configured by an issuer of the payment card. Each of the security parameters of the first set comprises both a security condition and an associated security rule to be applied by the payment card when the security condition is fulfilled.

The secure element 70 comprises a security configurator 73 configured to store in the memory a second set 12 of security parameters configured by a cardholder 50 during a customization phase. Each of the security parameters of the second set comprises both a security condition and an associated security rule to be applied by the payment card 10 when the security condition is fulfilled.

During a transaction phase subsequent to the customization phase, the payment card is configured to receive one or more transaction parameters 22 of a started financial transaction involving the payment card 10 and the terminal 20.

The payment card may be configured to receive the transaction parameters 22 from the terminal using any appropriate (standardized or proprietary) format. For instance the terminal may send the transaction parameters in the Processing options Data Objects List data (PDOL data) of a Get Processing Options (GPO) command of EMV^{©} flow.

The payment card 10 comprises a security engine 75 configured to check which condition of the first set 11 is satisfied by the transaction parameters 22 and to select the security rule associated with the satisfied condition as a first selected security rule.

The security engine 75 is configured to check which condition of the second set 12 is satisfied by the transaction parameters 22 and to select the security rule associated with the satisfied condition as a second selected security rule.

The received transaction parameters 22 are intrinsic to the financial transaction.

The transaction parameters may include one or more of the following items: a transaction amount, an identifier of a merchant (e.g. the name or a reference uniquely assigned to the merchant), a type of merchant (e.g. Bakery, Gas station or Supermarket), a transaction date, a transaction type (e.g. payment or cash withdrawal), a terminal type (e.g. POS terminal or ATM), a communication mode, a Terminal Country Code, a Transaction Currency Code and a location (of the terminal involved in the financial transaction).

The security engine 75 is configured to apply both said first and second selected security rules to the financial transaction and to take into account the result of checks specified by the security rules to make a decision to accept or decline the payment transaction.

It is to be noted that both first and second set 11 & 12 contain security parameter value(s) specifying the behavior of the payment card 10 when the card is involved in a financial transaction.

The secure element 70 comprises program instructions intended to be executed by the processor of the secure element to perform treatments required by the invention. In particular, the security configurator 73 and the security engine 75 may be implemented as a separate set of program instructions that is executed by the hardware processor.

For example, the first set 11 may comprise two security parameters. The first security parameter may specify that below a predefined amount threshold (security condition #1) presence of the card proximate the payment terminal is sufficient to consider the card user as being authenticated (security rule #1) while the second security parameter may specify that when the transaction amount is equal to or above the predefined threshold (security condition #2) the card user must be authenticated using a PIN code (security rule #2). At the same time, the second set 12 may comprise a security parameter specifying that whatever the value of the transaction amount (security condition #3), the card must authenticate the user using a PIN code (security rule #3) .

Thus, when the card is involved in a financial transaction whose amount is below the predefined threshold, the security engine 75 detects that both security condition #1 and #3 are fulfilled and applies both security rules #1 and #3. Consequently, since the card 10 is near the payment terminal for carrying out the transaction, the payment card 10 requests typing of a PIN code and checks the PIN code provided by the user before authorizing (or denying) the pending financial transaction.

In some embodiments, the payment card may embed a biometric sensor and the second selected security rule may require the payment instrument authenticate the cardholder 50 using the biometric sensor. Preferably, the biometric sensor may be a fingerprint sensor.

For example, the first set 11 may comprise a first security parameter specifying that below a predefined amount threshold (security condition #1) no user authentication is required (security rule #1) and a second security parameter specifying that when the transaction amount is equal to or above a predefined threshold (security condition #2) the card user must be authenticated using a PIN code (security rule #2). At the same time, the second set 12 may comprise a security parameter specifying that when the transaction amount is equal to or above the same predefined threshold (security condition #4) the card user must be authenticated using a biometric data (security rule #4).

Thus, when the card is involved in a financial transaction whose amount is above the predefined threshold, the security engine 75 detects that both security condition #2 and #4 are fulfilled and applies both security rules #2 and #4. Consequently, the payment card 10 requests typing of a PIN code and capturing of biometric data and checks both the typed PIN code and the biometric data provided by the user before authorizing (or denying) the pending financial transaction.

It is to be noted that the security engine applies the first selected security rule (belonging to the first set) associated with a fulfilled security condition. Thus, even if the second selected security rule (belonging to the second set) is less demanding than the first security rule belonging to the first set, the level of security applied to the financial transaction by the card is not reduced compared to the security level required by the first set of security parameters. In other word, the second selected rule does not prevent the payment card to apply the first selected rule, but instead, comes as an additional rule to be applied.

In some embodiments, the payment card may be communicably coupled to portable hardware device 60 like a phone or a laptop. The security configurator 73 may be configured to receive data 61 from the coupled hardware device 60 through a contactless protocol session and to update the second set 12 of security parameters in the memory of the payment card by using the received data 61.

The security parameters of the first set 11 are permanently fixed (i.e. hardcoded) in the card memory. The security configurator 73 cannot modify the content of the first set 11 of security parameters.

The portable hardware device 60 may comprise a configuration application designed to allow the cardholder 50 specifying security parameters to be downloaded in the card memory. Thus, the cardholder 50 may update the content of the second set 12 of security parameters.

Preferably, the contactless protocol session between the card and the hardware device 60 is protected by using preset keys that may have been previously set during a pairing phase.

In some embodiments, the payment card may be configured to authorize update of the second set with less restrictive security parameters only if the payment card has successfully authenticated the cardholder 50.

For example, assuming that one security parameter of the second set 12 imposes a first security level, the payment card may be configured to authorize the cardholder to replace this security parameter with a new security parameter that imposes a second security level lower than the first security level only if the payment card has successfully authenticated the cardholder via a PIN code or a captured biometric data.

The payment card may store the second set in any appropriate container like a file or a database for example.

Although presented for a smart card, embodiments of the invention may also apply to payment instruments having various form factors. For instance, the payment instrument may be a payment ring, a payment bracelet or a digitalized payment card hosted by a phone.

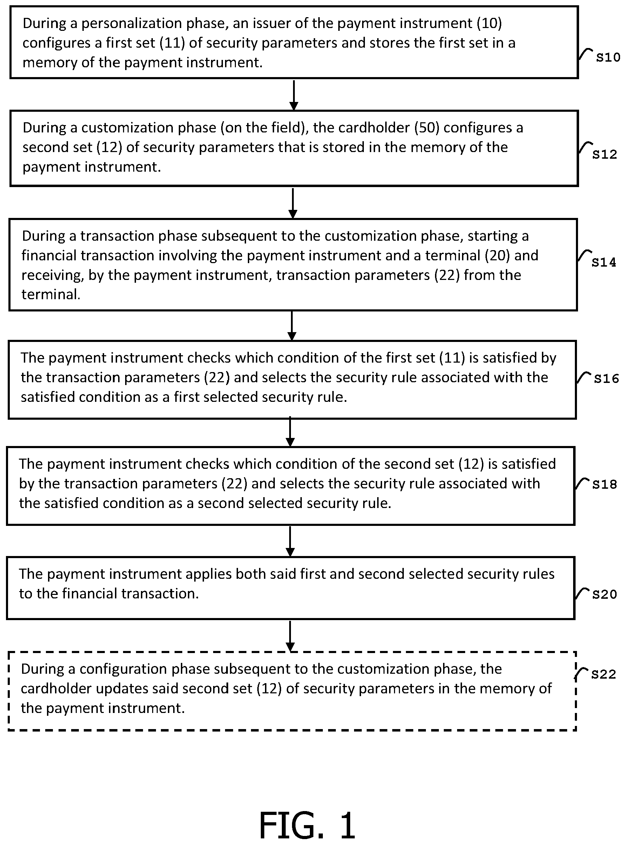

Figure 1 depicts an exemplary flow diagram for providing a cardholder with control over the behavior of a payment instrument according to an example of the invention.

In this example, the payment instrument 10 is a card associated with a user 50 (i.e. bank customer) for payment or cash withdrawal and may be implemented as any of the embodiments presented above. For instance, the payment card 10 may be similar to the one described at Figure 2.

In a first step S10, an issuer of the payment card 10 configures a first set 11 of security parameters and stores the first set 11 in the memory of the payment card. These actions may be performed in a conventional way during the personalization phase of the card in a secure plant. Then the issuer gives the payment card 10 to the user.

Then during a customization phase which occurs when the card is deployed on the field, the cardholder may configure a second set 12 of security parameters separate from the first set 11. The second set 12 is then stored in the memory of the payment card 10. (Step S12)

Then during a transaction phase subsequent to the customization phase, a terminal 20 starts a financial transaction involving the payment card 10 at step S14. The payment card 10 receives transaction parameters 22 from the terminal. The terminal may be a POS terminal or an ATM (Automated Teller Machine).

Upon receipt of the transaction parameters 22, the payment card looks for which condition of the first set 11 matches the transaction parameters and selects the security rule associated with the satisfied condition as a first selected security rule. (Step S16)

Under normal operative conditions, the card is expected to find a security rule to apply based on the received transaction parameters. Preferably, the card may automatically select a default security rule to apply if no condition of the first set 11 matches the transaction parameters. The default security parameter comprising the default security rule may have been specified by a specific indicator during the initial personalization phase of the card 10.

Then the payment card looks for which condition of the second set 12 matches the transaction parameters and selects the security rule associated with the satisfied condition as a second selected security rule. (Step S18)

Steps S16 and S18 may be performed in any order or merged in a single operation.

Then the payment card applies both first and second selected security rules to the financial transaction at step S20.

It may happen that no condition of the second set 12 matches the transaction parameters. In such a case, the payment card applies only the first selected security rule to the financial transaction at step S20, the payment card considering the second selected security rule as being transparent and always fulfilled for the financial transaction.

In some embodiments, the cardholder (i.e. user 50) may update the second set 12 of security parameters in the memory of the payment card during a configuration phase subsequent to the customization phase (or to the transaction phase) at step S22. The user may couple the payment card with a portable hardware device 60 to establish a wireless communication session between them. For instance, the communication session may rely on Bluetooth Low Energy^{©} (BLE). The portable hardware device 60 has a user interface allowing the user to specify data 61 to be send to the card for modifying the content of the second set 12.

The portable device 60 comprises a software application designed to allow the user to select/identify data 61 to be send to the card. The data 61 may comprise one or more descriptions of security parameter to be inserted in (or remove from) the second set 12 of the payment card.

The portable hardware device 60 may be a smartphone, a PDA (Personal Digital Assistant), a Tablet PC or a laptop for instance.

Preferably, the portable device 60 and the card 10 belong (or are assigned) to the same user and have been paired in a previous phase to share one or more secret values allowing securing the contactless communication channel.

The payment card may receive data 61 from the coupled hardware device 60 and update the second set 12 of security parameters in the memory of the payment card by using the data 61 received from the portable hardware device 60 through the contactless communication session.

In some embodiments, a security rule defined by the cardholder may require a change of cardholder authentication method (CVM). For example, the first set 11 may comprise only security parameters specifying that no user authentication is required for any financial transactions operated in contactless mode. The second set 12 may comprise a security parameter specifying that PIN code authentication is required for any financial transactions operated in contactless mode (i.e. when the payment instrument communicates with the terminal through a contactless channel.) By applying both first and second selected security rules, the payment instrument imposes a cardholder authentication through a PIN code capture when operating a contactless financial transaction.

Thus applying both first and second selected security rules leads to accept or decline the financial transaction depending on the result of the checks specified by the selected security rules.

In some embodiments, a security rule defined by the cardholder may deny cash withdrawal transactions or payment transactions with a terminal located in a specific area. For example, the second selected security rule may specify that cash withdrawal transactions are forbidden with an automated teller machine located in a foreign country. In another example, the second selected security rule may specify that cash withdrawal transactions are forbidden with an automated teller machine located in a blacklisted place. The payment instrument may store the blacklist and perform the location check or requires a remote bank server to check if the current place is authorized. The blacklist may comprise any type of geographical area like countries, cities, cantons, districts of city, etc.

In some embodiments, a security rule defined by the cardholder may deny financial transactions having a specific combination of transaction parameters. For example, the second set 12 may comprise a security parameter, which denies payment transactions having an amount above a limit value, and which are initiated at a Gas station.

The second set 12 may comprise a security parameter having a security condition mixing any number of transaction parameters like the transaction amount, the identifier of the merchant, the type of merchant, the current date, the type of transaction, the type of terminal type, the communication mode (between the payment instrument and the terminal) and the location of the terminal.

In some embodiments, the payment instrument may embed a biometric sensor and the second set 12 may comprise a security parameter specifying a security rules that requires the payment instrument authenticate the cardholder using the biometric sensor regardless the transaction amount. Thus, the payment instrument can then reject a transaction that would have been accepted (according to the first security rule in contactless mode for an amount below 50 dollars) without user authentication if the biometric check fails.

Thanks to some embodiments of the invention, it is possible to dynamically configure the second set of security parameters stored in a payment card to change the its behavior after the card has been delivered to the cardholder.

Thanks to some embodiments of the invention, the cardholder may autonomously change the behavior of their payment card without needing to go to a bank branch and without deployment of new hardware devices at Point-Of-Sale or ATM side.

Thanks to some embodiments of the invention, the payment instrument may automatically and autonomously apply security parameters previously specified by the cardholder independently of (i.e. before the beginning of) the transaction.

Some embodiments of the invention allow avoiding the problem of collecting and recycling hardware components of old payment cards (in the case where a new physical payment card would be built, replacing the existing one).

The invention is not limited to the described embodiments or examples. In particular, the described features of the presented embodiments may be combined as can be understood by those skilled in the art.

## Claims

**1.** A method for providing a cardholder (50) with control over a payment instrument (10) comprising:
configuring, by an issuer of the payment instrument, a first set (11) of security parameters and storing said first set (11) in a memory of the payment instrument, each of the security parameters of the first set comprising both a security condition and an associated security rule to be applied by the payment instrument when the security condition is fulfilled;
wherein said method comprises:
during a customization phase, configuring, by the cardholder (50), a second set (12) of security parameters and storing said second set (12) in the memory of the payment instrument, each of the security parameters of the second set comprising both a security condition and an associated security rule to be applied by the payment instrument when the security condition is fulfilled;
during a transaction phase subsequent to the customization phase:
starting a financial transaction involving the payment instrument and a terminal (20) and receiving, by the payment instrument, transaction parameters (22) from the terminal;
checking, by the payment instrument, which condition of the first set (11) is satisfied by the transaction parameters (22) and selecting the security rule associated with the satisfied condition as a first selected security rule;
checking, by the payment instrument, which condition of the second set (12) is satisfied by the transaction parameters (22) and selecting the security rule associated with the satisfied condition as a second selected security rule; and
applying, by the payment instrument, both said first and second selected security rules to the financial transaction.

**2.** The method according to claim 1, wherein applying both said first and second selected security rules leads to impose a specific cardholder authentication method.

**3.** The method according to claim 2, wherein the payment instrument embeds a biometric sensor and wherein the second selected security rule requires the payment instrument authenticate the cardholder (50) using the biometric sensor.

**4.** The method according to claim 1, wherein applying both said first and second selected security rules leads to accept or decline the financial transaction.

**5.** The method according to claim 4, wherein the second selected security rule leads to deny the financial transaction if the financial transaction is a cash withdrawal and the terminal is an automated teller machine or wherein the second selected security rule leads to deny the financial transaction if the terminal is located in a blacklisted place.

**6.** The method according to claim 4, wherein the second selected security rule leads to deny the financial transaction if the terminal is communicably coupled to the payment instrument through a contactless channel.

**7.** The method according to claim 1, wherein the transaction parameters (22) include one or more of the group comprising: a transaction amount, an identifier of a merchant, a type of merchant, a date, a transaction type, a terminal type, a communication mode and a location.

**8.** The method according to claim 1, wherein during a configuration phase subsequent to the transaction phase, the cardholder updates said second set (12) of security parameters in the memory of the payment instrument via a user interface of a portable hardware device (60) coupled to the payment instrument through a contactless protocol.

**9.** The method according to claim 1, wherein at least one security parameter of said second set (12) imposes a first security level, wherein the payment instrument authorizes the cardholder to replace said at least one security parameter with a new security parameter that imposes a second security level lower than the first security level only if the payment instrument has successfully authenticated the cardholder.

**10.** A payment instrument (10) comprising a hardware processor, a memory and a first set (11) of security parameters configured by an issuer of the payment instrument, each of the security parameters of the first set comprising both a security condition and an associated security rule to be applied by the payment instrument when the security condition is fulfilled;
wherein said payment instrument comprises a security configurator (73) configured to store in the memory a second set (12) of security parameters configured by a cardholder (50) during a customization phase, each of the security parameters of the second set comprising both a security condition and an associated security rule to be applied by the payment instrument when the security condition is fulfilled;
wherein during a transaction phase subsequent to the customization phase the payment instrument is configured to receive transaction parameters (22) of a started financial transaction involving the payment instrument and a terminal (20);
wherein the payment instrument comprises a security engine (75) configured to check which condition of the first set (11) is satisfied by the transaction parameters (22) and to select the security rule associated with the satisfied condition as a first selected security rule;
wherein the security engine (75) is configured to check which condition of the second set (12) is satisfied by the transaction parameters (22) and to select the security rule associated with the satisfied condition as a second selected security rule; and
wherein the security engine (75) is configured to apply both said first and second selected security rules to the financial transaction.

**12.** The payment instrument according to claim 10, wherein the payment instrument embeds a biometric sensor and wherein the second selected security rule requires the payment instrument authenticate the cardholder (50) using the biometric sensor.

**13.** The payment instrument according to claim 10, wherein the security configurator (73) is configured to receive data from a portable hardware device (60) coupled to the payment instrument through a contactless protocol and to update said second set (12) of security parameters in the memory of the payment instrument by using the received data.

**14.** The payment instrument according to claim 10, wherein at least one security parameter of said second set (12) imposes a first security level, wherein the payment instrument is configured to authorize the cardholder to replace said at least one security parameter with a new security parameter that imposes a second security level lower than the first security level only if the payment instrument has successfully authenticated the cardholder.

**15.** The payment instrument according to claim 10, wherein the payment instrument is a smart card, a payment ring or a digitalized card hosted by a mobile device.
